# EUROPEAN PATENT APPLICATION

(11) **EP 3 736 440 A1**
(43) Date of publication of application: **11.11.2020**
(21) Application number: 19173716.2
(22) Date of filing: 10.05.2019
(51) Int. Cl.: F03D 7/04, F03D 17/00

(54) **A METHOD FOR COMPUTER-IMPLEMENTED ANALYSIS OF A WIND FARM COMPRISING A NUMBER OF WIND TURBINES**

(71) Applicant: Siemens Gamesa Renewable Energy A/S, 7330 Brande (DK)
(72) Inventor: The designation of the inventor has not yet been filed
(74) Representative: Aspacher, Karl-Georg

(57) **Abstract**

The invention relates to a method for computer-implemented analysis of a wind farm (1) comprising a number of wind turbines (2) with respective rotors, wherein at each time point of one or more time points the following steps are performed:
i) applying an object detection algorithm (ODA) to a digital image (IM) showing the current state of the earth's ground in a surrounding area of the wind farm (1), resulting in the extraction and localization of a number of detected objects (3, 3') not belonging to the wind farm (1) within the image (IM);
ii) identifying a number of specific objects (3) out of the number of detected objects (3, 3'), each specific object (3) having an influence on the air flow occurring at the rotor of at least one wind turbine (2) of the wind farm (1) ;
iii) determining whether there is a change with respect to the number of specific objects (3) in comparison to an earlier state of the earth's ground in the surrounding area of the wind farm (1);
iv) performing one or more actions (AC) in case that there is a change with respect to the number of specific objects (3) in comparison to the earlier state of the earth's ground in the surrounding area of the wind farm (1).

## Description

The invention refers to a method and a system for computer-implemented analysis of a wind farm comprising a number of wind turbines. Furthermore, the invention refers to a corresponding computer program product and a corresponding computer program.

During the planning phase of a wind farm, the operation conditions of the farm, e.g. mechanical loads acting on the rotors of the wind turbines, are analyzed. In this analysis, all obstacles and neighboring wind turbines are taken into account. Based on this analysis, the locations of the wind turbines of the farm as well as the control procedure of the wind turbines are chosen such that a high electric energy production is achieved and that the turbines are suitable to withstand the wind conditions.

After the commissioning of a wind farm, the control procedure of the farm is usually not updated although changes in the surrounding area of the farm may have an influence on the operation of the wind turbines, e.g. additional turbines belonging to another wind farm may cause turbulences having an effect on the wind turbines of the existing wind farm. Therefore, wind turbines of existing farms often do not operate in an optimal way.

It is an object of the invention to provide a method for computer-implemented analysis of a wind farm taking into account changes in the surrounding area of the farm.

This object is solved by the method according to claim 1. Preferred embodiments of the invention are defined in the dependent claims.

The method of the invention provides a computer-implemented analysis of a wind farm comprising a number of wind turbines with respective rotors. In other words, the wind farm includes one or more wind turbines, each turbine having a rotor being driven by wind in order to generate electricity. The wind farm which is analyzed by the method of the invention has already been installed at a location on the earth's ground.

In the method of the invention, the following steps i) to iv) are performed at each time point of one or more time points. In a step i), an object detection algorithm is applied to a digital image showing a current state of the earth's ground in a surrounding area of the wind farm. This object detection algorithm results in the extraction and localization of a number of detected objects not belonging to the wind farm within the image. As an object detection algorithm, any prior art algorithm for analyzing images may be used. In a particularly preferred embodiment, the object detection algorithm is based on a trained data driven model where images comprising known objects of corresponding object types were used as training data so that objects of these object types can be extracted. In a particularly preferred embodiment, the data driven model is a neural network. Preferably, a Convolutional Neural Network well known from the prior art is used. Convolutional Neural Networks are particularly suitable for processing image data.

In a step ii), a number of specific objects out of the number of detected objects is identified, each specific object having an influence on the air flow occurring at the rotor of at least one turbine of the wind farm. In a preferred embodiment, the object types of the detected objects which can be derived by the object detection algorithm as well as the positions of the detected objects are processed in order to identify the specific objects. E.g., in case that a detected object is a wind turbine of another wind farm, it is determined that this turbine has an influence on turbines of the existing wind farm in case that the wake of the rotor of this turbine reaches the rotors of the turbines of the existing wind farm. In case that a detected object is a building, the height of the building may be derived from the digital image or another source of information, where the building is only classified as a specific object if the height of the building is higher than a predetermined threshold such that wind blowing towards the rotors of the turbines of the existing wind farm may be blocked or by other means affected by the building. Other methods in order to identify specific objects lie within the expertise knowledge of a skilled person.

The above term referring to the number of detected or specific objects is to be interpreted broadly. The number of such objects may refer to one or more objects and even to no objects in case that an object cannot be detected or identified in step i) or step ii).

In a step iii) of the method according to the invention, it is determined whether there is change with respect to the number of specific objects (i.e. whether specific objects have disappeared or occurred or whether properties of specific objects have changed) in comparison to an earlier state (i.e. a state at a time point before the current state) of the earth's ground in the surrounding area of the wind farm.

In case of such a change, one or more actions are performed (automatically) in step iv) of the method according the invention. In a straightforward implementation, an output is generated via a user interface as one action, the output informing a user about the change with respect to the number of specific objects. The output may comprise detailed information about this change. Preferably, the user interface is an interface belonging to the operator of the wind farm. When such an output is generated, appropriate counter measures for optimizing the control of the wind farm may be initiated manually.

In another embodiment of the invention, an action performed in case of a change with respect to the number of specific objects refers to the automatic adaption of a control procedure which controls the operation of the wind farm. In a preferred embodiment, the adaptation of the control procedure is accompanied by an output via a user interface providing information about this adaptation. Preferably, the user interface is an interface belonging to the operator of the wind farm.

The invention is based on the finding that an automatic analysis of digital images of the earth's ground around a wind farm enables to derive objects relevant for the operation of the wind farm. As a consequence, appropriate actions may be performed in case of changes with respect to relevant objects in the surrounding area of the wind farm.

In a particularly preferred embodiment, the number of specific objects comprises one or more of the following objects:
- one or more further wind turbines of another wind farm than the wind farm being analyzed;
- one or more trees, e.g. a group of trees or a forest;
- one or more ground inclinations;
- one or more ground depressions;
- one or more buildings.

The ground inclinations or ground depressions may e.g. be caused by surface mining.

In another preferred embodiment, the air flow change caused by the change of the number of specific objects is determined, where one or more effects on the wind farm caused by this air flow change are derived, thus resulting in an adaptation of the control procedure of the wind farm based on the one or more effects. It is well known for a skilled person how such an air flow change can be derived from a change of the number of specific objects.

In a preferred variant of the above embodiment, one effect of the one or more effects is a change of the mechanical load acting on one or more wind turbines of the wind farm. It is straightforward for a skilled person to calculate such a change of the mechanical load. Preferably, in case that such a change of the mechanical load is derived as an effect, the control procedure is adapted such that the life time of one or more wind turbines of the wind farm is not decreased or is increased in comparison to the non-adapted control procedure.

In another variant, one effect of the one or more effects is a change of the generated electric power of one or more wind turbines of the wind farm. It is straightforward for a skilled person to calculate this change of the electric power from an air flow change. In a preferred variant of this embodiment, the control procedure is adapted such that the electric energy production of the wind farm within a predetermined time interval (e.g. the annual electric energy production) is increased in comparison to the non-adapted control procedure.

The above steps i) to iv) are preferably performed several times based on certain criteria. In a preferred embodiment, steps i) to iv) are repeated in case that an updated digital image is available, e.g. from a database storing those images.

The digital image processed by the method of invention is preferably taken by a flying object over ground, particularly by a satellite or a plane or a drone. Nevertheless, the image may also be taken by one or more cameras installed on ground at the location of the wind farm, e.g. at the position of the nacelle of one or more wind turbines.

Besides the above method, the invention refers to a system for computer-implemented analysis of a wind farm comprising a number of wind turbines with respective rotors, where the system comprises a processor configured to carry out the method according to the invention or according to one or more embodiments of the invention.

The invention also refers to a computer program product with program code, which is stored on a non-transitory machine-readable carrier, for carrying out the method according to the invention or according to one or more embodiments of the invention, when the program code is executed on a computer.

Furthermore, the invention refers to a computer program with program code for carrying out the method according to the invention or according to one or more embodiments of the invention, when the program code is executed on a computer.

In the following, an embodiment of the invention will be described in detail with respect to the accompanying drawings wherein:
- Fig. 1: shows a flow chart illustrating the steps according to a method based on an embodiment of the invention; and
- Fig. 2: shows a system for performing the method as shown in Fig. 1.

The invention as described in the following refers to the analysis of a wind farm already in operation. The control procedure of the wind farm was initially specified when launching the wind farm. At this time, obstacles around the location of the wind farm were taken into account in order to define a control procedure resulting in a high energy production of the wind farm and a low mechanical load on the wind turbines of the farm.

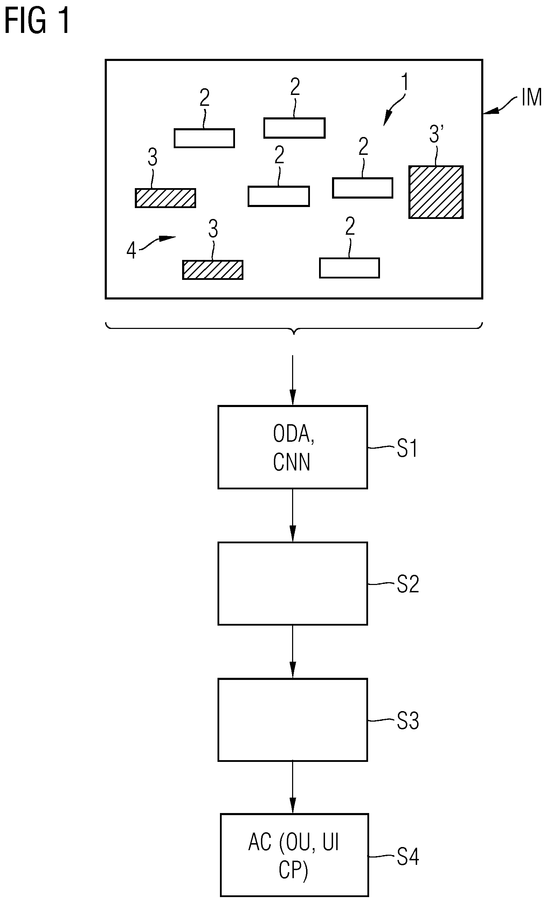

In order to update this control procedure, digital satellite images IM provided from the earth's ground in the surrounding area of the wind farm are checked in regular intervals. To do so, the method of Fig. 1 has access to a database comprising such digital satellite images. E.g., the satellite images IM are taken from a central database which is publicly available. An example of a satellite image IM is shown schematically in Fig. 1. The digital image comprises the wind farm 1 having five wind turbines 2. Furthermore, two wind turbines 3 of another wind farm 4 as well as a building 3' are located in the surrounding area of the wind farm 1. The wind turbines 2 are shown schematically by white horizontal bars in the image IM of Fig. 1. Analogously, the wind turbines 3 are shown schematically by hatched horizontal bars. Moreover, the building 3' is shown schematically by a hatched square. When the wind farm 1 was launched, the turbines 3 and the building 3' where not present and, thus, not taken into account when determining the control procedure of the wind farm.

In the method of Fig. 1, the image IM is analyzed in step S1 by an object detection algorithm ODA. As a result of step S1, the wind turbines 3 as well as the building 3' are extracted from the image IM. In the embodiment described herein, a well-known algorithm based on a Convolutional Neural Network CNN is used for detecting objects within the image. The Convolutional Neural Network is trained based on training images having known objects of known object types shown therein. As known from the prior art, a Convolutional Neural Network comprises convolutional layers followed by pooling layers as well as fully connected layers in order to extract and classify the objects within an image.

In step S2 of the method of Fig. 1, it is determined which of the objects 3, 3' have an influence on the air flow occurring at the rotor of at least one turbine 2 of the wind farm 1. In the scenario of Fig. 1, it is determined that the wind turbines 3 of wind farm 4 have an influence on this air flow due to the wake of the rotors of these wind turbines. Contrary to that, the building 3' does not affect the air flow occurring at the rotors of the turbines 2. Hence, as a result of step S2, it is determined that the wind turbines 3 are specific objects having an influence on the air flow occurring at the rotor of at least one turbine of the wind farm 1.

In a next step S3, the image IM is compared with a digital satellite image taken from the surrounding area of the wind farm 1 at an earlier time than the image IM, e.g. at the time when the wind farm was commissioned. Alternatively, the image IM may be compared with other digital data describing the objects in the surrounding area of the wind farm at an earlier time, e.g. with digital data from the planning phase of the wind farm 1. In the embodiment described herein, it is determined that the wind turbines 3 were not present in the digital satellite image taken at an earlier time from the surrounding area of the wind farm 1.

As a result of step S3, is it determined that there is a change with respect to the number of specific objects in comparison to an earlier state of the earth's ground in a surrounding area of the wind farm. As a result, appropriate actions AC are performed in step S4. Particularly, an output OU informing about this change is provided via a user interface UI, e.g. via a visual user interface in the form of display. The user interface UI may be located at the site of the wind farm operator so that the operator is informed about this change. As a consequence, the operator can initiate appropriate steps for changing the control strategy of the wind farm, if necessary.

In the embodiment described herein, an automatic adaption of the control procedure CP (i.e. the control program) of the wind farm is performed as another action AC in step S4 in order to optimize the electric energy production and/or the life time of the wind farm taking into account that additional wind turbines 3 are located adjacent to the wind farm 1. In other words, the control procedure CP is changed so that a higher energy production and/or a longer life time is achieved in comparison to the non-changed control procedure.

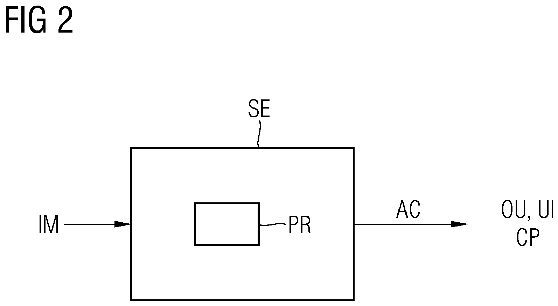

Fig. 2 shows an embodiment of a system in order to perform the method as described with respect to Fig. 1. The system is implemented as a platform based on a central server SE comprising a processor PR which is used in order to perform the above described method steps S1 to S4. To do so, the server SE has access to up-to-date satellite images IM where the server preferably can process the data of a plurality of different wind farms.

After having analyzed an image IM, the corresponding actions AC are automatically performed in case of a change with respect to the specific objects. I.e., the output OU informing about this change is provided via the user interface UI and the control procedure CP used for controlling the wind farm is optimized. Moreover, further outputs may be generated by the user interface UI, e.g. an output providing information about the adaption of the control procedure.

The invention as described in the foregoing has several advantages. Particularly, the conditions with respect to the operation of a wind farm can be checked regularly based on updated images of the wind farm. In one embodiment, those images are satellite images. Nevertheless, the images may also refer to images taken by other flying objects (plane or drone) or by a camera installed on ground at the location of the wind farm. In a preferred embodiment, the control procedure of the wind farm is adapted automatically in case that the operation conditions of the wind farm have changed due to changes in its environment.

## Claims

1. A method for computer-implemented analysis of a wind farm (1) comprising a number of wind turbines (2) with respective rotors, wherein at each time point of one or more time points the following steps are performed:
i) applying an object detection algorithm (ODA) to a digital image (IM) showing the current state of the earth's ground in a surrounding area of the wind farm (1), resulting in the extraction and localization of a number of detected objects (3, 3') not belonging to the wind farm (1) within the image (IM);
ii) identifying a number of specific objects (3) out of the number of detected objects (3, 3'), each specific object (3) having an influence on the air flow occurring at the rotor of at least one wind turbine (2) of the wind farm (1) ;
iii) determining whether there is a change with respect to the number of specific objects (3) in comparison to an earlier state of the earth's ground in the surrounding area of the wind farm (1);
iv) performing one or more actions (AC) in case that there is a change with respect to the number of specific objects (3) in comparison to the earlier state of the earth's ground in the surrounding area of the wind farm (1) .

2. The method according to claim 1, wherein the one or more actions (AC) comprise:
- generating an output (OU) via a user interface (UI), the output (OU) informing a user about the change with respect to the number of specific objects (3); and/or
- adapting a control procedure (CP) which controls the operation of the wind farm (1).

3. The method according to claim 1 or 2, wherein the number of specific objects (3) comprises:
- one or more further wind turbines (3) of another wind farm (4) and/or
- one or more trees and/or
- one or more ground inclinations and/or
- one or more ground depressions and/or
- one or more buildings (3').

4. The method according to one of the preceding claims in combination with claim 2, wherein the air flow change caused by the change of the number of specific objects (3) is determined, where one or more effects on the wind farm (1) caused by this air flow change are derived, thus resulting in an adaptation of the control procedure (CP) of the wind farm (1) based on the one or more effects.

5. The method according to claim 4, wherein one effect is a change of the mechanical load acting on one or more wind turbines (2) of the wind farm (1).

6. The method according to claim 5, wherein the control procedure (CP) is adapted such that the life time of one or more wind turbines (2) of the wind farm (1) is not decreased or is increased.

7. The method according to one of claims 4 to 6, wherein one effect is a change of the generated electric power of one or more wind turbines (2) of the wind farm (1).

8. The method according to claim 7, wherein the control procedure (CP) is adapted such that the electric energy production of the wind farm (1) within a predetermined time interval is increased.

9. The method according to one of the preceding claims, wherein steps i) to iv) are repeated in case that an updated digital image (IM) is available.

10. The method according to one of the preceding claims, wherein the object detection algorithm (ODA) is based on a trained data driven model.

11. The method according to claim 10, wherein the data driven model is a neural network, preferably a Convolutional Neural Network.

12. The method according to one of the preceding claims, wherein the digital image (IM) is an image taken by a flying object over ground, particularly taken by a satellite or a plane or a drone.

13. A system for computer-implemented analysis of a wind farm (1) comprising a number of wind turbines (2) with respective rotors, where the system comprises a processor (PR) configured to carry out a method, in which at each time point of one or more time points the following steps are performed:
i) applying an object detection algorithm (ODA) to a digital image (IM) showing the current state of the earth's ground in a surrounding area of the wind farm (1), resulting in the extraction and localization of a number of detected objects (3, 3') not belonging to the wind farm (1) within the image (IM);
ii) identifying a number of specific objects (3) out of the number of detected objects (3, 3'), each specific object (3) having an influence on the air flow occurring at the rotor of at least one wind turbine (2) of the wind farm (1) ;
iii) determining whether there is a change with respect to the number of specific objects (3) in comparison to an earlier state of the earth's ground in the surrounding area of the wind farm (1);
iv) performing one or more actions (AC) in case that there is a change with respect to the number of specific objects (3) in comparison to the earlier state of the earth's ground in the surrounding area of the wind farm (1) .

14. The system according to claim 13, wherein the system is configured to perform a method according to one of claims 2 to 12.

15. A computer program product with program code, which is stored on a non-transitory machine-readable carrier, for carrying out a method according to one of claims 1 to 12 when the program code is executed on a computer.

16. A computer program with program code for carrying out a method according to one of claims 1 to 12 when the program code is executed on a computer.
